# FASCICULE DE BREVET EUROPEEN

(11) **EP 0 650 796 B1**
(45) Date de publication et mention de la délivrance du brevet: **12.07.1995**
(21) Numéro de dépôt: 93870208.1
(22) Date de dépôt: 25.10.1993
(51) Int. Cl.: B23K 11/04, B23K 11/087

(54) **Procédé et dispositif d'équerrage et soudage de bandes métalliques**
Verfahren und Vorrichtung zum Herstellen der Rechtwinkligkeit und zum Verschweissen metallischer Bänder
Procedure and device for giving squareness and welding to metallic strips

(43) Date de publication de la demande: 03.05.1995
(73) Titulaire: COIL JOINING INTERNATIONAL S.A., B-6001 Charleroi (BE)
(72) Inventeur: Bury, Denis, B-1620 Drogenbos (BE)
(74) Mandataire: Prignot, Jean

(56) Documents cités:
- EP-A- 0 248 143
- DE-A- 2 422 295
- US-A- 3 941 972

## Description

La présente invention a pour objet un procédé d'équerrage des extrémités respectivement d'une bande métallique entrante et d'une bande métallique sortante et de soudage en bout par étincelage des dites extrémités équerrées dans une machine combinée comportant une soudeuse et une cisaille, notamment en vue d'assurer la continuité d'une ligne de produits plats en sidérurgie.

Le procédé de l'invention met en oeuvre un cycle de cisaillage-soudage conforme au préambule de la revendication 1.

L'invention concerne également une machine combinée entièrement automatique destinée au cisaillage et au soudage en bout par étincelage des extrémités d'une bande métallique sortante et d'une bande métallique entrante selon le procédé ci-dessus.

Le procédé et la machine combinée précités sont spécialement conçus pour être mis en oeuvre dans une ligne automatique de décapage d'une bande métallique pour la sidérurgie en vue d'assurer la continuité de la ligne ou tout simplement pour souder en bout des tôles ou des feuillards.

On connaît par le brevet américain US-A-3.941.972 une machine combinée comportant une soudeuse en bout et une cisaille. La soudeuse en bout par étincelage de deux tôles ou bandes en métal ou en matière soudable mise à nu comprend des mâchoires de serrage, un élément d'arrêt conique et des dispositifs d'avancement et de transmission des pressions. La cisaille se dispose entre les paires de mâchoires de la soudeuse en vue de la découpe simultanée des deux extrémités de tôles à souder. Elle est dégagée latéralement et ensuite déplacée longitudinalement avant chaque opération de soudage pour la mettre à l'abri des projections de scories pendant l'opération de soudage.

Dans cette machine connue, les tôles sont maintenues exclusivement par les mâchoires de la soudeuse, également pendant l'opération de cisaillage au cours de laquelle l'effort de retenue doit être important.

En outre, cette machine connue ne permet pas le cisaillage-soudage en bout de bandes métalliques de faible épaisseur. La raison en est que dans le soudage en bout par étincelage, l'épaisseur de la bande à souder détermine la quantité de matériau de la bande nécessaire au soudage et donc la longueur de bande devant faire saillie des mâchoires de la soudeuse. Or dans la configuration de cette machine connue, la partie des extrémités de bandes à souder faisant saillie des mâchoires de la soudeuse après cisaillage est au minimum égale à l'épaisseur des contre-lames de la cisaille repérées 29 au brevet US-A-3.941.972.

Enfin, toujours en ce qui concerne le réglage de la longueur de bande faisant saillie des mâchoires après cisaillage, notons que dans cette machine de l'art antérieur ce réglage n'est possible que par paliers, et que la conception même de la machine empêche en principe un réglage continu.

Un procédé et dispositif permettant de régler de manière continue, et jusqu'à de faibles valeurs, la longueur de bande faisant saillie des mâchoires après cisaillage est décrit à la demande de brevet DE-A-2 422 295.

Dans ce document (qui décrit un procédé et un dispositif selon le préambule des revendications 1 et 6), des dispositifs de serrage auxiliaires assurent, en lieu et place des mâchoires, la retenue des extrémités de bande au cours de l'opération de cisaillage, la distance entre les paires de mâchoires étant au cours de cette opération réglée à une valeur fixe, maximale. Les mâchoires sont ensuite positionnées par rapport aux extrémités de bandes, avant leur serrage, et donc la distance entre les paires de mâchoires ajustée, pour que la partie des bandes faisant saillie des mâchoires corresponde aux dimensions requise pour le soudage par étincelage.

Dans ce procédé la retenue des bandes, lors du cisaillage, s'effectue dans les dispositifs de serrage auxiliaires, à distance de la cisaille.

La présente invention a dès lors pour objet de fournir un procédé et une machine d'équerrage soudage qui permettent de remédier à ces inconvénients de l'art antérieur, et notamment qui, tout en permettant comme le procédé et le dispositif de DE-A-2 422 295 un réglage de manière continue, et jusqu'à de faibles valeurs, de la longueur de bande faisant saillie des mâchoires après cisaillage assurent une retenue des bandes métalliques au cours du cisaillage, aussi proche que possible de l'emplacement de cisaillage.

Ces buts sont atteints suivant l'invention en mettant en oeuvre un procédé d'équerrage et soudage en bout des extrémités de bandes métalliques entrante et sortante dans une ligne de fabrication continue de produits plats comportant une soudeuse et une cisaille, dans lequel on ménage un espace entre les paires de mâchoires de la soudeuse, situées respectivement du côté de l'extrémité d'une bande sortante et du côté de l'extrémité d'une bande entrante, on assure l'alignement et le centrage des deux extrémités de bandes qu'on amène dans l'espace ménagé entre les paires de mâchoires, on assure la retenue des extrémités de bande centrées et alignées par des dispositifs de retenue auxiliaires, on centre la cisaille sur l'espace entre les paires de mâchoires, on introduit la cisaille dans l'espace ménagé entre les paires de mâchoires de la soudeuse, on actionne la cisaille convenablement centrée dans cet espace pour couper simultanément l'extrémité de la bande entrante et de la bande sortante, réalisant ainsi leur équerrage, et on recueille les chutes dans la cisaille, on évacue la cisaille, avec les chutes formées, de l'espace ménagé entre les paires de mâchoires de la soudeuse, on assure la retenue des extrémités de bande équerrées entre les mâchoires de la soudeuse et on approche l'une de l'autre les paires de mâchoires de la soudeuse jusqu'en position de soudage et on soude par étincelage les extrémités des bandes métalliques entrante et sortante, procédé qui se caractérise en ce qu'on ramène l'espace entre les paires de mâchoires de la soudeuse d'une valeur maximum à une valeur déterminée en fonction des caractéristiques de la tôle, avant introduction de la cisaille dans cet espace, les mâchoires de la soudeuse étant ouvertes, on introduit, après centrage sur l'espace entre les paires de mâchoires de la soudeuse, la cisaille dans cet espace en amenant les contre-lames entre les mâchoires ouvertes de la soudeuse, on serre les mâchoires de la soudeuse tout en maintenant en service les dispositifs de retenue auxiliaires et on actionne la cisaille, on desserre les mâchoires de la soudeuse tout en maintenant en service les dispositifs de retenue auxiliaires et on évacue la cisaille, on resserre les mâchoires de la soudeuse avant d'approcher l'une de l'autre les paires de mâchoires et de souder par étincelage les extrémités des bandes métalliques entrante et sortante.

Suivant une caractéristique supplémentaire du procédé de l'invention, au cours du mouvement d'introduction et/ou d'évacuation de la cisaille dans et à l'écart de l'espace entre les paires de mâchoires de la soudeuse, on racle la face des électrodes supérieures et inférieures de la soudeuse dirigée vers cet espace.

Suivant une caractéristique du procédé de l'invention, les dispositifs de raclage des électrodes sont amenés aux dimensions de l'espace entre les paires de mâchoires de la soudeuse au début du mouvement d'introduction de la cisaille dans le dit espace, ces dimensions étant maintenues sur toute la longueur du mouvement d'introduction de manière à assurer le raclage des dites électrodes.

Suivant une autre caractéristique du procédé de l'invention, le dispositif de raclage des électrodes, réglé aux dimensions d'écartement maximum des paires de mâchoires de la soudeuse, est amené en position active après actionnement de la cisaille pour le découpage des extrémités des bandes, écartement des paires de mâchoires à l'écartement maximum et recentrage de la cisaille sur cet espace réglé a l'écartement maximum, le raclage s'effectuant sur la course d'évacuation de la cisaille à l'écart de cet espace.

Suivant encore une autre caractéristique du procédé de l'invention, le raclage des électrodes supérieures s'effectue au cours de mouvement d'introduction de la cisaille dans l'espace entre les paires de mâchoires de la soudeuse, tandis que le raclage des électrodes inférieures s'effectue sur la course d'évacuation de la cisaille à l'écart de cet espace.

L'invention concerne également un dispositif de soudage en bout par étincelage dans une ligne de fabrication de produits plats, constitué d'une soudeuse pourvue de deux paires de mâchoires destinées à assurer le serrage des extrémités de bandes métalliques respectivement entrante et sortante et leur soudage, dont une paire de mâchoires est mobile vers et à l'écart de l'autre paire de mâchoires qui est fixe, de dispositifs de serrage auxiliaires des extrémités de bandes entrante et sortante, prévus à la suite de chaque paire de mâchoires de la soudeuse, et d'une cisaille guillotine à deux lames, mobile transversalement vers et à l'écart de l'espace formé entre les paires de mâchoires, qui se caractérise en ce que les contre-lames de la cisaille se disposent respectivement entre les mâchoires de chaque paire de mâchoires de la soudeuse lorsque la cisaille est située dans l'espace entre les paires de mâchoires de la soudeuse, et en ce que la cisaille est mobile longitudinalement vers et à l'écart de sa position d'introduction dans l'espace entre les paires de mâchoires.

Suivant une caractéristique supplémentaire du dispositif de l'invention, il comprend en outre un dispositif de butée réglable dans le chemin longitudinal de la cisaille, destiné à être réglé pour amener la cisaille dans l'axe de l'espace constitué entre les paires de mâchoires, et un dispositif de butée escamotable mais non réglable, pour assurer le positionnement de la cisaille dans l'axe de l'espace maximum pouvant être constitué entre les paires de mâchoires de la soudeuse.

Suivant une autre caractéristique de l'invention, la mâchoire supérieure de chaque paire de mâchoires de la soudeuse comporte un chemin de roulement pour des galets portant la contre-lame correspondante de la cisaille.

Suivant une autre caractéristique de l'invention, la cisaille comporte des dispositifs de raclage de la face des électrodes de la soudeuse dirigées vers l'espace entre les paires de mâchoires de la soudeuse.

Suivant une caractéristique supplémentaire de l'invention, les dispositifs de raclage des électrodes sont à écartement fixe correspondant à l'espace maximum pouvant être constitué entre les paires de mâchoires de la soudeuse et sont escamotables.

Suivant une autre caractéristique de l'invention, les dispositifs de raclage des électrodes sont à écartement réglable, leur position étant commandée à l'écartement existant entre les paires de mâchoires par des palpeurs venant au contact des dites paires de mâchoires.

Suivant encore une autre caractéristique de l'invention, les dispositifs de raclage des électrodes supérieures sont à écartement réglable tandis que les dispositifs de raclage des électrodes inférieures sont à écartement fixe.

L'invention sera mieux comprise en se reportant à la description en même temps qu'au dessin annexé qui représente, uniquement à titre d'exemple, divers modes de réalisation de l'invention et dans lequel:
- la fig 1 est une vue schématique et partielle de la machine de l'invention montrant la coopération entre la soudeuse et la cisaille
- les fig. 2a à 2e sont des vues schématiques et partielles illustrant la coopération de la soudeuse et de la cisaille au cours des diverses étapes du procédé de l'invention
- la fig. 3 représente schématiquement un mode de réalisation d'un dispositif de raclage d'électrodes suivant l'invention, et
- la fig 4 montre également schématiquement un autre mode de réalisation d'un dispositif de raclage d'électrodes suivant l'invention.

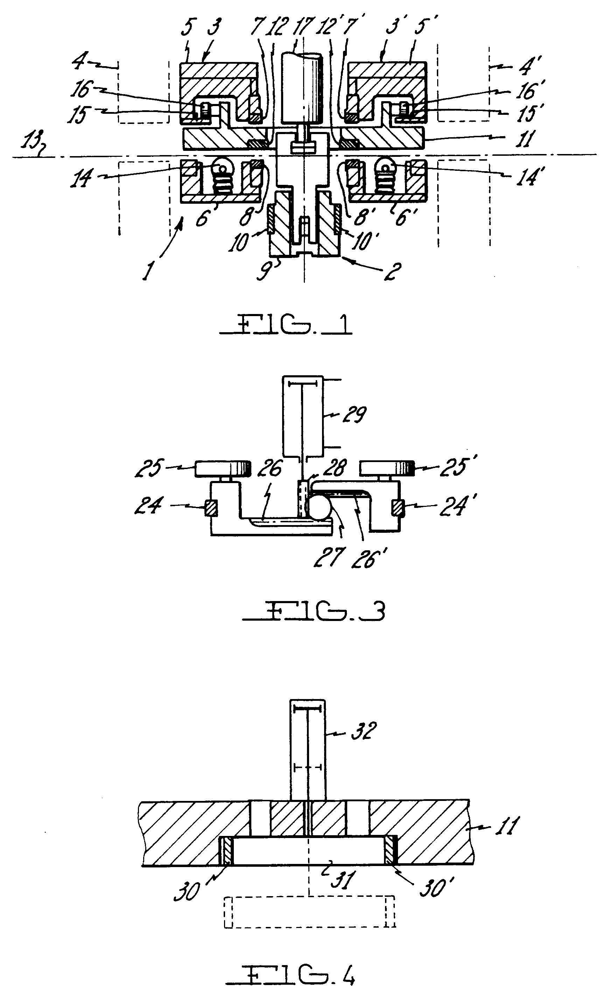

En se reportant au mode de réalisation illustré à la fig. 1, qui est une vue partielle ne montrant que les éléments de la soudeuse et de la cisaille venant en coopération, le dispositif de l'invention comporte une soudeuse identifiée par la référence générale 1 et une cisaille guillotine double coupe identifiée par la référence générale 2.

La soudeuse 1 comporte des serrages principaux constitués par les paires de mâchoires 3, 3' et des serrages auxiliaires 4, 4'. Chaque paire de mâchoires 3, 3' est constituée d'une mâchoire supérieure 5, respectivement 5' et d'une mâchoire inférieure 6,6'. Les mâchoires supérieures 5, 5' sont pourvues chacune d'une électrode supérieure 7, 7' tandis que les mâchoires inférieures 6, 6' sont pourvues d'une électrode inférieure 8, 8'.

La cisaille 2, dont est essentiellement représenté l'outillage cisaille, est constituée d'une poutre porte-lames 9 portant des lames 10, 10' et d'un ensemble barre de guidage 11 portant des contre-lames 12, 12'.

Le niveau de défilement de la bande métallique au-travers de la soudeuse est représenté en 13 à la fig.1.

Dans les mâchoires inférieures 6, 6' de la soudeuse sont prévus des rouleaux 14, 14', escamotables.

Dans les mâchoires supérieures 5, 5' de la soudeuse il est formé des chemins de roulement 15, 15', destinés à coopérer avec des galets de roulement 16, 16' auxquels est suspendue la barre de guidage 11 portant les contre-lames 12, 12' de la cisaille.

La poutre porte-lame 9 comporte à son extrémité avant un dispositif de verrouillage 17 qui, en position déverrouillée, s'abaisse sous le niveau de défilement 13 de la bande et permet l'insertion de la cisaille dans la soudeuse en présence d'une bande métallique. En position verrouillée, telle que représentée au dessin, ce dispositif se verrouille sur le dispositif d'actionnement de la poutre porte-lame 9, non représenté.

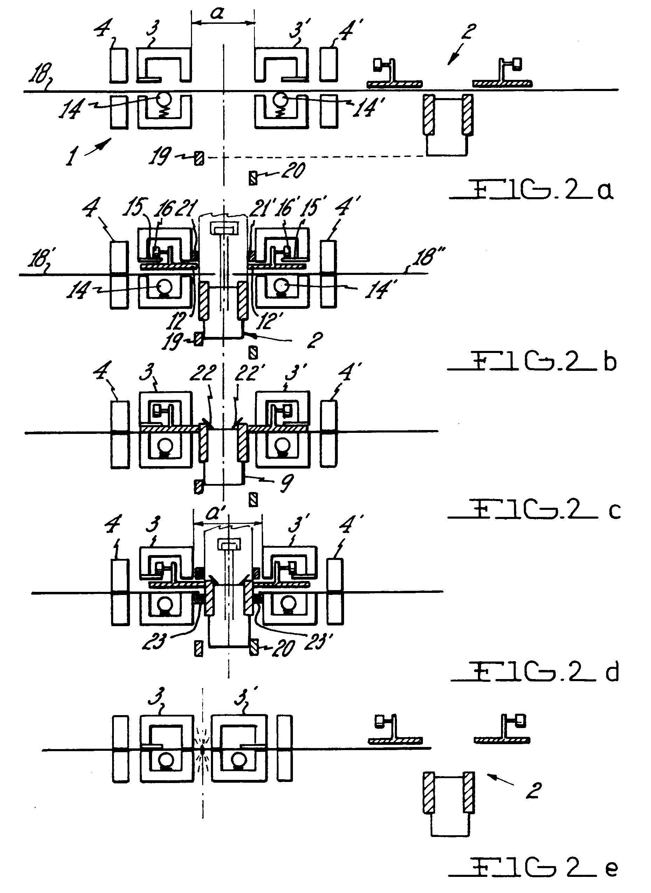

En se reportant aux fig. 2a à 2e, où pour la facilité de l'identification les éléments de la cisaille sont hachurés tandis que les éléments de la soudeuse ne le sont pas, les étapes du procédé d'équerrage et de soudage suivant l'invention sont les suivantes.

En position hors service de la soudeuse 1 illustrée en fig. 2a, les paires de mâchoires 3, 3', de même que les serrages auxiliaires 4, 4' sont ouverts, la cisaille 2 est en position de repos à l'écart de la soudeuse, tandis qu'une bande métallique 18 défile au-travers du dispositif, en étant soutenue, dans la soudeuse, par les rouleaux 14, 14' en service. Bien entendu d'autres supports de la bande sont prévus dans la machine combinée, qui ne sont pas représentés ici.

L'écartement a des paires de mâchoires 3, 3' est réglé à une valeur correspondant à la largeur de la cisaille augmentée de la longueur de bande devant faire saillie de chaque paire de mâchoires pour le soudage par étincelage (cette longueur étant fonction, comme rappelé ci-dessus, de l'épaisseur de la bande à souder). Une butée 19 est réglée pour positionner la cisaille de manière centrée sur l'écartement a des paires de mâchoires. Une seconde butée 20, hors service à ce stade, est prévue pour centrer la cisaille sur l'écartement maximum pouvant exister entre les paires de mâchoires 3, 3'.

Lorsque l'on arrive en fin de bande on procède comme illustré à la fig. 2b, c'est-à-dire que la fin de bande sortante 18' est positionnée pour que son extrémité se situe au-delà de la paire de mâchoires 3, dans l'espace entre les paires de mâchoires 3, 3'. Une bande entrante 18'' est positionnée pour que son extrémité se situe au-delà de la paire de mâchoires 3', dans l'espace entre les mâchoires 3, 3'. Ces extrémités de bande sont alignés et centrées, et les serrages auxiliaires 4, 4' sont activés tandis que les rouleaux 14, 14' sont mis hors service.

Simultanément, la cisaille 2 est transférée jusqu'à venir au contact de la butée 19, position dans laquelle elle est centrée sur l'espace a ménagé entre les paires de mâchoires 3, 3'. La cisaille est alors introduite dans cet espace, les galets 16 supportant, par l'intermédiaire de la barre de guidage 11 les contre-lames 12, 12' qui se disposent entre les mâchoires 5,6, respectivement 5',6' des paires de mâchoires 3, 3'. Lors de l'introduction de la cisaille 2 dans l'espace entre les paires de mâchoires 3, 3' de la soudeuse 1, des racleurs 21, 21' réglés aux dimensions de cet espace assurent le raclage des électrodes supérieures prévues dans les mâchoires 5, 5'.

A l'étape suivante (fig. 2c), les paires de mâchoires 3, 3' sont serrées, les serrages auxiliaires 4, 4' étant maintenus en service, et la cisaille est actionnée; les chutes 22, 22' des extrémités de bandes 18', 18'' sont recueillies sur le porte-lames.

La butée 20 (fig 2d) est alors mise en service, tandis que les paires de mâchoires 3, 3' sont écartées l'une de l'autre à leur écartement maximum a'. La cisaille 2 est déplacée jusqu'à venir au contact de la butée 20 et est ainsi centrée sur cet espace correspondant à l'écartement maximum a' des paires de mâchoires 3, 3', tandis que des racleurs 23, 23', réglés sur l'écartement maximum des paires de mâchoires, sont mis en service pour assurer le raclage des électrodes inférieures.

Les paires de mâchoires 3, 3' sont ouvertes, les serrages auxiliaires 4, 4' demeurant en service, et la cisaille 2 est évacuée de l'espace entre les paires de mâchoires 3, 3' de la soudeuse, emportant les chutes 22, 22' et assurant le raclage des électrodes inférieures.

La cisaille 2 est alors ramenée dans sa position d'attente à l'écart de l'espace entre les paires de mâchoires 3, 3' de la soudeuse (fig 2d) où elle est débarrassée, de manière non représentée, des chutes 22, 22', et la paire de mâchoires 3' est approchée de la paire de mâchoires 3 jusqu'en position de soudage.

Ainsi qu'on peut le constater, notamment de la fig 1, les chemins de roulement 15, 15' formés dans les mâchoires 5, 5' sont suffisamment larges pour que les galets 16, 16' puissent y occuper diverses positions, et ainsi que les contre-lames 12, 12' puissent occuper diverses positions par rapport aux paires de mâchoires 3, 3' de la soudeuse, ce qui permet la coopération de la cisaille et de la soudeuse pour diverses valeurs de l'écartement a entre les paires de mâchoires de la soudeuse. En outre, cette coopération est possible sur une gamme continue de valeurs d'écartement entre les limites constituées d'une part par la largeur de la cisaille 2 et d'autre part par l'écartement maximal a' des paires de mâchoires de la soudeuse.

Il convient de noter également que lors du soudage-forgeage, la retenue des bandes métalliques est assurée non seulement par les paires de mâchoires 3, 3' de la soudeuse, mais aussi par les serrages auxiliaires 4, 4', ce qui permet de décharger quelque peu les mâchoires de la soudeuse de l'effort de retenue de la bande métallique. De par leur retenue de la bande métallique, les mâchoires assurent le rôle de serre-flans lors de l'actionnement de la cisaille. Etant donné que la distance des mâchoires de l'emplacement de coupe est réglée en fonction de l'épaisseur de la bande métallique, cette fonction de serre-flan est efficace dans tous les cas.

A ce propos, il importe de souligner également que l'ordre dans lequel les extrémités d'entrée 18'' et de sortie 18' des bandes sont positionnées et maintenues dans la soudeuse importe peu, il suffit que chaque extrémité soit d'abord retenue par le serrage auxiliaire 4, 4' correspondant après avoir été convenablement alignée et centrée.

En vue de son déplacement longitudinal le long de la soudeuse et transversal vers et à l'écart de l'espace a entre les paires de mâchoires 3, 3' de la soudeuse, l'équipement de cisaillage comprend un bâti fixe, non représenté, s'étendant de la position de repos de la cisaille (fig 2a) à sa position active (fig 2b), ainsi qu'un châssis mobile, également non représenté, permettant le déplacement de l'outillage de cisaillage longitudinalement le long de la soudeuse et son introduction dans l'espace a entre les paires de mâchoires 3, 3' de la soudeuse.

La mise à l'écart, en position de repos, de la cisaille au cours de l'opération de soudage permet de mettre celle-ci à l'abri des projections de scories.

Ce mêmes projections se déposent toutefois sur les mâchoires 5, 6, 5', 6' de la soudeuse, et plus particulièrement sur les électrodes 7, 8, 7', 8'. C'est la raison pour laquelle la présente invention prévoit également de mettre à profit l'introduction et/ou l'évacuation de la cisaille 2 dans et hors de l'espace a, a' entre les paires de mâchoires 3, 3' pour réaliser un raclage des électrodes 7, 7', 8, 8' permettant d'éliminer les scories déposées au cours de l'opération de soudage précédente.

La fig. 3 illustre un mode de réalisation d'un dispositif de raclage plus particulièrement destiné à s'adapter à l'écartement existant entre les mâchoires de la soudeuse, et pouvant donc être utilisé pour toute une gamme de positions relatives des paires de mâchoires l'une par rapport à l'autre, tandis que la fig 4 illustre un mode de réalisation d'un dispositif de raclage à écartement fixe, ne pouvant être utilisé que pour un écartement donné des paires de mâchoires de la soudeuse.

Suivant le mode de réalisation de la fig. 3, la position de racleurs 24, 24' est déterminée par des galets suiveurs 25, 25' destinés à prendre appui sur les paires de mâchoires 3, 3', galets commandant la position de supports à crémaillère 26, 26' solidaires des dits racleurs 24, 24', les crémaillères entraînant un pignon 27, qui lui-même actionne une tige dentée 28 reliée à un cylindre hydraulique 29. La résistance à la compression dans le cylindre hydraulique permet aux galets suiveurs de rester au contact des mâchoires de la soudeuse, et en même temps d'assurer le centrage de la cisaille sur l'espace entre les mâchoires tout au long de l'introduction de la cisaille dans cet espace. L'introduction des galets dans l'espace entre les mâchoires est favorisé par exemple par un chanfrein formé au bord d'attaque des mâchoires par les galets.

Le dispositif de la figure 3 est particulièrement adapté au raclage des électrodes au cours de la phase d'introduction de la cisaille dans l'espace entre les mâchoires.

Le dispositif de raclage de la fig 4 comporte des racleurs 30, 30' montés sur un support rigide 31. Ce support est mobile sous l'action par exemple d'un vérin 32 entre une position de repos, illustrée en trait plein au dessin, et une position active montrée en pointillés. La position de repos est par exemple une position encastrée à l'avant de la barre de réglage 11 portant les contre-lames de la cisaille. Ce dispositif ne peut être utilisé pour le raclage des électrodes que pour un écartement déterminé des paires de mâchoires de la soudeuse. Il sera de préférence dimensionné pour être utilisé à l'écartement maximum des mâchoires de la soudeuse.

Suivant un mode de réalisation préféré de l'invention, le dispositif de la fig. 3 est utilisé pour le raclage des électrodes supérieures 7, 7' lors de l'introduction de la cisaille dans l'espace entre les mâchoires 3, 3' et le dispositif de la fig 4 est utilisé pour le raclage des électrodes inférieures 8, 8' lors du retrait de la cisaille à l'écart de l'espace entre les mâchoires 3, 3'.

La machine combinée du type de celle comportant la soudeuse et la cisaille de l'invention de dispose normalement dans une ligne de fabrication continue de produits plats. Une telle machine peut comporter outre la soudeuse et la cisaille des dispositifs accessoires tels que raboteuse, encocheuse, table de bouclage, dispositifs de poinçonnage, de guidage, de centrage.

## Revendications

1. Procédé d'équerrage et soudage en bout des extrémités de bandes métalliques entrante et sortante dans une machine combinée comportant une soudeuse (1) et une cisaille (2), dans lequel
- on ménage un espace entre les paires de mâchoires (3, 3') de la soudeuse, situées respectivement du côté de l'extrémité d'une bande sortante (18') et du côté de l'extrémité d'une bande entrante (18''),
- on assure l'alignement et le centrage des deux extrémités de bandes (18', 18'') qu'on amène dans l'espace ménagé entre les paires de mâchoires
- on assure la retenue des extrémités de bande (18', 18'') centrées et alignées par des dispositifs de retenue auxiliaires (4, 4'),
- on centre la cisaille sur l'espace entre les paires de mâchoires,
- on introduit la cisaille (2) dans l'espace ménagé entre les paires de mâchoires (3, 3') de la soudeuse,
- on actionne la cisaille (2) convenablement centrée dans cet espace pour couper simultanément l'extrémité de la bande entrante et de la bande sortante, réalisant ainsi leur équerrage, et on recueille les chutes (22, 22') dans la cisaille,
- on évacue la cisaille (2), avec les chutes formées, de l'espace ménagé entre les paires de mâchoires (3, 3') de la soudeuse,
- on assure la retenue des extrémités de bande équerrées entre les mâchoires de la soudeuse et on approche l'une de l'autre les paires de mâchoires (3, 3') de la soudeuse jusqu'en position de soudage et
- on soude par étincelage les extrémités des bandes métalliques entrante et sortante,
caractérisé en ce qu'
- on ramène l'espace entre les paires de mâchoires (3, 3') de la soudeuse d'une valeur maximum (a') à une valeur (a) déterminée en fonction des caractéristiques de la tôle, avant introduction de la cisaille (2) dans cet espace, les mâchoires (5, 6, 5', 6') de la soudeuse étant ouvertes,
- on introduit, après centrage sur l'espace (a) entre les paires de mâchoires (3, 3') de la soudeuse, la cisaille (2) dans cet espace (a) en amenant les contre-lames (12, 12') entre les mâchoires (5, 6, 5', 6') ouvertes de la soudeuse,
- on serre les mâchoires (5, 6, 5', 6') de la soudeuse tout en maintenant en service les dispositifs de retenue auxiliaires (4, 4') et on actionne la cisaille (2),
- on desserre les mâchoires (5, 6, 5', 6') de la soudeuse tout en maintenant en service les dispositifs de retenue auxiliaires (4, 4') et on évacue la cisaille (2),
- on resserre les mâchoires (5, 6, 5', 6') de la soudeuse avant d'approcher l'une de l'autre les paires de mâchoires (3, 3') et de souder par étincelage les extrémités des bandes métalliques entrante et sortante.

2. Procédé suivant 1, caractérisé en ce qu'au cours du mouvement d'introduction et/ou d'évacuation de la cisaille (2) dans et à l'écart de l'espace (a, a') entre les paires de mâchoires (3, 3') de la soudeuse, on racle la face des électrodes supérieures (7, 7') et inférieures (8, 8') de la soudeuse (1) dirigée vers cet espace.

3. Procédé suivant 1 et 2, caractérisé en ce que les dispositifs de raclage (21, 21') des électrodes sont amenés aux dimensions de l'espace (a) entre les paires de mâchoires (3, 3') de la soudeuse au début du mouvement d'introduction de la cisaille dans le dit espace, ces dimensions étant maintenues sur toute la longueur du mouvement d'introduction de manière à assurer le raclage des dites électrodes.

4. Procédé suivant 1 et 2, caractérisé en ce que le dispositif de raclage (23, 23') des électrodes, réglé aux dimensions d'écartement maximum (a') des paires de mâchoires (3, 3') de la soudeuse, est amené en position active après actionnement de la cisaille (2) pour le découpage des extrémités des bandes, écartement des paires de mâchoires (3, 3') à l'écartement maximum (a') et recentrage de la cisaille (2) sur cet espace réglé a l'écartement maximum (a'), le raclage s'effectuant sur la course d'évacuation de la cisaille (2) à l'écart de cet espace.

5. Procédé suivant 1 à 4, caractérisé en ce que le raclage des électrodes supérieures (7, 7') s'effectue au cours du mouvement d'introduction de la cisaille (2) dans l'espace (a) entre les paires de mâchoires (3, 3') de la soudeuse, tandis que le raclage des électrodes inférieures (8, 8') s'effectue sur la course d'évacuation de la cisaille (2) à l'écart de cet espace (a').

6. Dispositif de soudage en bout par étincelage dans une ligne de fabrication de produits plats, constitué d'une soudeuse (1) pourvue de deux paires de mâchoires (3, 3') destinées à assurer le serrage des extrémités de bandes métalliques respectivement entrante (18'') et sortante (18') et leur soudage, dont une paire de mâchoires (3') est mobile vers et à l'écart de l'autre paire de mâchoires (3) qui est fixe, de dispositifs de serrage auxiliaires (4, 4') des extrémités de bandes entrante (18'') et sortante (18'), prévus à la suite de chaque paire de mâchoires (3, 3') de la soudeuse, et d'une cisaille guillotine (2) à deux lames (10, 10'), mobile transversalement vers et à l'écart de l'espace formé entre les paires de mâchoires (3, 3'), caractérisé en ce que les contre-lames (12, 12') de la cisaille (2) se disposent respectivement entre les mâchoires (5, 6, 5', 6') de chaque paire de mâchoires (3, 3') de la soudeuse lorsque la cisaille est située dans l espace (a) entre les paires de mâchoires de la soudeuse, et en ce que la cisaille (2) est mobile longitudinalement vers et à l'écart de sa position d'introduction dans l'espace entre les paires de mâchoires.

7. Dispositif suivant 6, caractérisé en ce qu'il comprend en outre un dispositif de butée (19) réglable dans le chemin longitudinal de la cisaille, dstiné à être réglé pour amener la cisaille (2) dans l'axe de l'espace (a) constitué entre les paires de mâchoires (3, 3'), et un dispositif de butée (20) escamotable mais non réglable, pour assurer le positionnement de la cisaille dans l'axe de l'espace maximum (a') pouvant être constitué entre les paires de mâchoires (3, 3') de la soudeuse.

8. Dispositif suivant 6 ou 7, caractérisé en ce que la mâchoire supérieure (5, 5') de chaque paire de mâchoires (3, 3') de la soudeuse comporte un chemin de roulement (15, 15') pour des galets (16, 16') portant la contre-lame (12, 12') correspondante de la cisaille.

9. Dispositif suivant l'une quelconque des revendications 6 à 8, caractérisé en ce que la cisaille (2) comporte des dispositifs de raclage (21, 21', 23, 23') de la face des électrodes (7, 7', 8, 8') de la soudeuse dirigées vers l'espace (a, a') entre les paires de mâchoires (3, 3') de la soudeuse.

10. Dispositif suivant 9 caractérisé en ce que les dispositifs de raclage (30, 30') des électrodes sont à écartement fixe correspondant à l'espace maximum (a') pouvant être constitué entre les paires de mâchoires (3, 3') de la soudeuse et sont escamotables.

11. Dispositif suivant 9, caractérisé en ce que les dispositifs de raclage (24, 24') des électrodes sont à écartement réglable, leur position étant commandée à l'écartement (a) existant entre les paires de mâchoires (3, 3') par des palpeurs (25, 25') venant au contact des dites paires de mâchoires (3, 3').

12. Dispositif suivant 10 et 11, caractérisé en ce que les dispositifs de raclage (21, 21') des électrodes supérieures (7, 7') sont des dispositifs de raclage (24, 24') à écartement réglable tandis que les dispositifs de raclage (23, 23') des électrodes inférieures (8, 8') sont des dispositifs de raclage (30, 30') à écartement fixe.

## Claims

1. A method of squaring and welding the ends of metal strips going into and out of a dual-purpose machine having a welder (1) and shears (2), comprising the steps of:
- providing a space between the pairs of jaws (3, 3') of the welder located respectively towards the end of an out-going strip (18') and towards the end of an in-going strip (18''),
- aligning and centering both ends of metal strips (18', 18'') in the space between the jaws,
- holding the aligned and centered strip ends with auxiliary clamps (4, 4'),
- centering the shears in the space between the pairs of jaws (3, 3') of the welder,
- inserting the shears (2) in the space between the pairs of jaws (3, 3') of the welder,
- activating the shears (2) appropriately centered in this space to simultaneously cut and square the ends of the in-going and out-going strips and collecting the cut ends (22, 22') in the shears,
- removing the shears (2), with the cut ends, from the space provided between the pairs of jaws (3, 3') of the welder,
- holding the squared ends of the strips between the jaws of the welder and bringing the pairs of jaws (3, 3') together into the welding position, and
- flash butt welding the ends of the in-coming and out-going metal strips,
characterized by
- reducing the space between the pairs of jaws (3, 3') of the welder from a maximum value (a') to a value (a) determined according to the characteristics of the sheet metal, before inserting the shears (2) in this space, the jaws (5, 6, 5', 6') of the welder being in open position,
- inserting the shears (2), after they have been centered in the space (a) between the pairs of jaws (3, 3') of the welder, in said space (a), so that the counter-blades (12, 12') are placed between the open jaws (5, 6, 5', 6') of the welder,
- tightening the jaws (5, 6, 5', 6') of the welder while keeping the strips with the auxiliary clamps (4, 4') in service and activating the shears (2),
- loosening the jaws (5, 6, 5', 6') of the welder while keeping the strips with the auxiliary clamps in service and removing the shears (2),
- re-tightening the jaws (5, 6, 5', 6') of the welder before bringing the pairs of jaws (3, 3') close together and flash-butt seam welding the ends of the in-going and the out-going metal strips.

2. The process according to claim 1, characterized by scraping the side of the upper (7, 7') and lower (8, 8') electrodes directed towards the space (a, a') between the pairs of jaws (3, 3') of the welder, in the course of insertion and/or removal of the shears in and from this space.

3. The process according to claims 1 and 2, characterized by adjusting the electrode scraping devices (21, 21') to the dimensions of the space (a) between the pairs of jaws (3, 3') of the welder, at the beginning of the insertion of the shears into said space, this position being maintained throughout the length of the insertion movement for scraping said electrodes.

4. The process according to claims 1 and 2, characterized in that the electrode scraping device (23, 23'), adjusted to the maximum distance (a') between the pairs of jaws (3, 3') of the welder, is brought into active position after activating of the shears for the cutting of the ends of the strips, spacing the pairs of jaws (3, 3') at maximum distance (a') and recentering the shears (2) in this space adjusted to the maximum distance (a'), the electrodes being scraped along the removal track of the shears (2) from said space.

5. The process according to claims 1 to 4, characterized in that the scraping of the upper electrodes (7, 7') is carried out during insertion of the shears (2) into the space (a) between the jaws (3, 3'), whereas the scraping of the lower electrodes (8, 8') is performed along the removal track of the shears (2) from the space (a') between the jaws.

6. A flash-butt welding device in a manufacturing line of flat products, comprising a welder (1) equipped with two pairs of jaws (3, 3') intended to clamp the ends respectively of an in-going (18'') and an out-going (18') metal strip, and weld them, one of said pairs of jaws (3') being movable back and forth from the other pair of jaws (3), which is a fixed one, auxiliary devices (4, 4') for clamping the ends of the in-going (18'') and the out-going (18') metal strips, provided at the rear of each pair of jaws (3, 3') of the welder, and crank shears (2) with two blades (10, 10'), said shears being movable sideways to and away from the space formed between the pairs of jaws (3, 3'), characterized in that the counter-blades (12, 12') of the shears (2) are positioned respectively between the jaws (5, 6, 5', 6') of each pair of jaws (3, 3') of the welder when the shears are located in the space (a) between the pairs of jaws of the welder, and in that the shears are movable longitudinally to and away from their position of insertion in the space between the pairs of jaws.

7. The device according to claim 6, characterized in that it further comprises, in the lengthwise track of the shears, an adjustable stop device (19) to be adjusted in order to bring the shears in the axis of the space (a) formed between the pairs of jaws (3, 3'), and a retractable but unadjustable stop device (20) to ensure the positioning of the shears in the axis of the maximum space (a') which can be formed between the pairs of jaws (3, 3') of the welder.

8. The device according to claim 6 or 7, characterized in that the upper jaw (5, 5') of each pair of jaws (3, 3') of the welder has a roller path (15, 15') for receiving rollers (16, 16') that support the corresponding counter-blade (12, 12') of the shears.

9. The device according to any of claims 6 through 8, characterized in that the shears (2) are equipped with scraping devices (21, 21', 23, 23') for scraping the surface of the electrodes (7, 7', 8, 8') of the welder aimed at the space (a, a') between the pairs of jaws (3, 3') of the welder.

10. The device according to claim 9, characterized in that the electrode scraping devices (30, 30') are retractable and are at a fixed distance corresponding to the maximum space (a') which can be formed between the pairs of jaws (3, 3') of the welder.

11. The device according to claim 9, characterized in that the electrode scraping devices (24, 24') are adjustable and their position is determined at the distance (a) existing between the pairs of jaws (3, 3') by sensors (25, 25') which come into contact with said pairs of jaws (3, 3').

12. The device according to claims 10 and 11, characterized in that the scraping devices (21, 21') for the upper electrodes are scraping devices (24, 24') adjustable in their position, while the scraping devices (23, 23') for the lower electrodes (8, 8') are scraping devices (30, 30') at fixed distance.

## Patentansprüche

1. Verfahren zum Herstellen der Rechtwinkligkeit und zum Stumpfschweißen der Enden ein- und austretender metallischer Bänder in einer kombinierten Maschine, bestehend aus einer Schweißmaschine (1) und einer Schere (2), wobei
- ein Zwischenraum zwischen den Spannbackenpaaren (3, 3') der Schweißmaschine vorgesehen wird, die sich auf der Seite des Endes eines austretenden Bands (18') bzw. auf der Seite des Endes eines eintretenden Bands (18'') befinden,
- die Ausrichtung und die Zentrierung der beiden Bandenden (18', 18'') erfolgt, die in den Zwischenraum zwischen den Spannbackenpaaren geführt werden,
- das Festhalten der zentrierten und ausgerichteten Bandenden (18', 18'') durch zusätzliche Haltevorrichtungen (4, 4') erfolgt,
- die Schere auf den Zwischenraum zwischen den Spannbackenpaaren zentriert wird,
- die Schere (2) in den Zwischenraum zwischen den Spannbackenpaaren (3, 3') der Schweißmaschine eingeführt wird,
- die in diesem Zwischenraum angemessen zentrierte Schere (2) betätigt wird, um gleichzeitig das Ende des eintretenden Bands und das Ende des austretenden Bands zu schneiden, wodurch ihre Rechtwinkligkeit hergestellt wird, und wobei die Abfälle (22, 22') in der Schere aufgefangen werden,
- die Schere (2) mit den entstandenen Abfällen aus dem Zwischenraum zwischen den Spannbackenpaaren (3, 3') der Schweißmaschine herausgefahren wird,
- das Festhalten der auf Rechtwinkligkeit gebrachten Bandenden zwischen den Spannbacken der Schweißmaschine erfolgt und die Spannbackenpaare (3, 3') der Schweißmaschine bis in Schweißposition einander angenähert werden und
- die Enden der eintretenden und austretenden metallischen Bänder mittels Abbrennstumpfschweißen verschweißt werden,
**dadurch gekennzeichnet,** daß
- der Zwischenraum zwischen den Spannbackenpaaren (3, 3') der Schweißmaschine von einem Höchstwert (a') auf einen in Abhängigkeit von den Merkmalen des Blechs bestimmten Wert (a) vor dem Einfahren der Schere (2) in diesen Zwischenraum zurückgestellt wird, wobei die Spannbacken (5, 6, 5', 6') der Schweißmaschine geöffnet sind,
- nach der Zentrierung auf den Zwischenraum (a) zwischen den Spannbackenpaaren (3, 3') der Schweißmaschine die Schere (2) in diesen Zwischenraum (a) eingeführt wird, wobei die Gegenmesser (12, 12') zwischen die geöffneten Spannbacken (5, 6, 5', 6') der Schweißmaschine verbracht werden,
- die Spannbacken (5, 6, 5', 6') der Schweißmaschine gespannt werden, während die zusätzlichen Haltevorrichtungen (4, 4') eingeschaltet bleiben, und die Schere (2) betätigt wird,
- die Spannbacken (5, 6, 5', 6') der Schweißmaschine gelöst werden, während die zusätzlichen Haltevorrichtungen (4, 4') eingeschaltet bleiben, und die Schere (2) ausgefahren wird,
- die Spannbacken (5, 6, 5', 6') der Schweißmaschine wieder gespannt werden, bevor die Spannbackenpaare (3, 3') einander angenähert und die Enden der eintretenden und austretenden metallischen Bänder mittels Abbrennstumpfschweißen verschweißt werden.

2. Verfahren nach Anspruch 1 , **dadurch gekennzeichnet,** daß während der Einfahr- und/oder Ausfahrbewegung der Schere (2) in den bzw. aus dem Zwischenraum (a, a') zwischen den Spannbackenpaaren (3, 3') der Schweißmaschine die zu diesem Zwischenraum gerichtete Fläche der oberen (7, 7') und unteren Elektroden (8, 8') der Schweißmaschine (1) abgestrichen wird.

3. Verfahren nach Anspruch 1 und 2 , **dadurch gekennzeichnet,** daß die Abstreichvorrichtungen (21, 21') zum Abstreichen der Elektroden auf die Abmessungen des Zwischenraums (a) zwischen den Spannbackenpaaren (3, 3') der Schweißmaschine zu Beginn der Einfahrbewegung der Schere in den genannten Zwischenraum eingestellt werden, wobei diese Abmessungen über die gesamte Länge der Einfahrbewegung beibehalten werden, um das Abstreichen der genannten Elektroden herbeizuführen.

4. Verfahren nach Anspruch 1 und 2 , **dadurch gekennzeichnet,** daß die auf die Abmessungen des maximalen Abstands (a') der Spannbackenpaare (3, 3') der Schweißmaschine eingestellte Abstreichvorrichtung (23, 23') der Elektroden nach der Betätigung der Schere (2) zum Abschneiden der Bandenden, der Spreizung der Spannbackenpaare (3, 3') auf den maximalen Abstand (a') und der Neuzentrierung der Schere (2) auf diesen auf den maximalen Abstand (a') eingestellten Zwischenraum in die Arbeitsposition verbracht wird, wobei das Abstreichen auf dem Ausfahrweg der Schere (2) aus diesem Zwischenraum heraus erfolgt.

5. Verfahren nach Anspruch 1 bis 4 , **dadurch gekennzeichnet,** daß das Abstreichen der oberen Elektroden (7, 7') im Verlauf der Einfahrbewegung der Schere (2) in den Zwischenraum (a) zwischen den Spannbackenpaaren (3, 3') der Schweißmaschine erfolgt, während das Abstreichen der unteren Elektroden (8, 8') auf dem Ausfahrweg der Schere (2) aus diesem Zwischenraum (a') heraus stattfindet.

6. Abbrennstumpfschweißvorrichtung in einer Fertigungsstraße für Flacherzeugnisse, bestehend aus einer Schweißmaschine (1) mit zwei Spannbackenpaaren (3, 3') für das Einspannen der Enden eintretender (18'') und austretender (18') metallischer Bänder und ihr Verschweißen, wobei ein Spannbackenpaar (3') zu dem anderen, feststehenden Spannbackenpaar (3) hin und von ihm weg beweglich ist, sowie mit zusätzlichen Spannvorrichtungen (4, 4') zum Einspannen der Enden der eintretenden (18'') und austretenden Bänder (18'), die im Anschluß an jedes Spannbackenpaar (3, 3') der Schweißmaschine vorgesehen sind, und mit einer Tafelschere (2) mit zwei Messern (10, 10'), die in Querrichtung zu dem Zwischenraum zwischen den Spannbackenpaaren (3, 3') hin und von ihm weg beweglich ist, **dadurch gekennzeichnet**, daß sich die Gegenmesser (12, 12') der Schere jeweils zwischen den Spannbacken (5, 6, 5', 6') jedes Spannbackenpaars (3, 3') der Schweißmaschine anordnen, wenn sich die Schere im Zwischenraum (a) zwischen den Spannbackenpaaren der Schweißmaschine befindet, und daß die Schere (2) in Längsrichtung zu ihrer Einfahrposition im Zwischenraum zwischen den Spannbackenpaaren hin und von ihr weg beweglich ist.

7. Vorrichtung nach Anspruch 6 , **dadurch gekennzeichnet,** daß sie außerdem eine in der Längsbahn der Schere verstellbare Anschlagvorrichtung (19) umfaßt, die so einzustellen ist, daß die Schere (2) in die Achse des Zwischenraums (a) zwischen den Spannbackenpaaren (3, 3') verbracht wird, sowie eine einziehbare, aber nicht verstellbare Anschlagvorrichtung (20) für die Positionierung der Schere in der Achse des maximalen Zwischenraums (a'), der zwischen den Spannbackenpaaren (3, 3') der Schweißmaschine gebildet werden kann.

8. Vorrichtung nach Anspruch 6 oder 7 , **dadurch gekennzeichnet,** daß die obere Spannbacke (5, 5') jedes Spannbackenpaars (3, 3') der Schweißmaschine eine Laufbahn (15, 15') für Rollen (16, 16') umfaßt, die das entsprechende Gegenmesser (12, 12') der Schere tragen.

9. Vorrichtung nach einem der Ansprüche 6 bis 8, **dadurch gekennzeichnet,** daß die Schere (2) Abstreichvorrichtungen (21, 21', 23, 23') zum Abstreichen der Fläche der Elektroden (7, 7', 8, 8') der Schweißmaschine umfaßt, die zum Zwischenraum (a, a') zwischen den Spannbackenpaaren (3, 3') der Schweißmaschine gerichtet sind.

10. Vorrichtung nach Anspruch 9, **dadurch gekennzeichnet,** daß die Abstreichvorrichtungen (30, 30') der Elektroden mit festem Abstand entsprechend dem maximalen Zwischenraum (a'), der zwischen den Spannbackenpaaren (3, 3') der Schweißmaschine gebildet werden kann, ausgeführt und einziehbar sind.

11. Vorrichtung nach Anspruch 9, **dadurch gekennzeichnet,** daß die Abstreichvorrichtungen (24, 24') der Elektroden mit verstellbarem Abstand ausgeführt sind, wobei ihre Position auf den Abstand (a) zwischen den Spannbackenpaaren (3, 3') durch Fühler (25, 25') eingestellt wird, die mit den genannten Spannbackenpaaren (3, 3') in Berührung kommen.

12. Vorrichtung nach Anspruch 10 und 11, **dadurch gekennzeichnet,** daß es sich bei den Abstreichvorrichtungen (21, 21') der oberen Elektroden (7, 7') um Abstreichvorrichtungen (24, 24') mit verstellbarem Abstand handelt, während die Abstreichvorrichtungen (23, 23') der unteren Elektroden (8, 8') als Abstreichvorrichtungen (30, 30') mit festem Abstand ausgeführt sind.
